# FASCICULE DE BREVET EUROPEEN

(11) **EP 1 741 586 B1**
(45) Date de publication et mention de la délivrance du brevet: **15.06.2011**
(21) Numéro de dépôt: 06116736.7
(22) Date de dépôt: 06.07.2006
(51) Int. Cl.: B60J 1/00, B60J 10/00, B60J 10/06

(54) **Dispositif d'obturation d'une baie de véhicule, à joint d'étanchéité intérieur, procédé de fabrication et véhicule automobile correspondants.**
Abschlussvorrichtung für eine Fahrzeugöffnung mit innerer Dichtung, Herstellungsverfahren und entsprechendes Fahrzeug
Closing device for an opening in a vehicle, with an interior sealing, method of manufacturing and corresponding vehicle

(30) Priorité: 07.07.2005 FR 0507284
(43) Date de publication de la demande: 10.01.2007
(73) Titulaire: Advanced Comfort Systems France SAS - ACS France, 79300 Bressuire (FR)
(72) Inventeur: Grenier, Nicolas, 79260 Sainte-Neomaye (FR); Tarzaim, Karim, 85200 Fontenay le Comte (FR)
(74) Mandataire: Bioret, Ludovic

(56) Documents cités:
- EP-A- 0 778 168
- EP-A- 0 857 844
- EP-A- 0 968 862
- FR-A- 2 782 298
- FR-A- 2 797 227
- US-A- 5 613 323

## Description

Le domaine de l'invention est celui des baies de véhicule. Plus précisément, l'invention concerne les dispositifs d'obturation d'une baie ménagée dans la carrosserie d'un véhicule, comprenant un ensemble fixe et une partie mobile. Plus précisément encore, l'invention concerne de tels dispositifs d'obturation présentant un aspect affleurant avec la carrosserie, et pourvus d'au moins un panneau mobile.

Classiquement, pour obturer la baie d'un véhicule, qu'il s'agisse d'une automobile, d'un véhicule utilitaire, d'un camion, d'un autobus ou d'un wagon de chemin de fer, on rapporte une glace, maintenue par un cadre de liaison. Ce dernier présente une partie interne et une partie externe, qui viennent pincer simultanément les bords de la glace et de l'ouverture ménagée dans la carrosserie, avec une garniture d'étanchéité.

Une autre technique est décrite dans les documents de brevets EP-0 778 168 et EP-0 857 844, au nom du même titulaire que la présente demande de brevet. Le dispositif d'obturation (appelé par la suite « baie flush ») présenté dans ces documents comprend un ensemble fixe et une partie mobile par rapport à l'ensemble fixe. La partie mobile (en un ou plusieurs éléments) est relié à l'ensemble fixe par des éléments fonctionnels qui assurent la mobilité requise et qui sont rapportés sur la face de l'ensemble fixe tourné vers l'intérieur du véhicule.

Dans la pratique, il est bien sûr nécessaire de prévoir des moyens assurant l'étanchéité entre l'ensemble fixe et la partie mobile lorsque cette dernière est en position fermée. Dans les dispositifs connus d'obturation de baies de véhicule, la vitre mobile vient généralement s'encastrer dans un logement prévu à cet effet dans la carrosserie, qui peut être équipé de joints ou de patins assurant l'étanchéité. Lorsque la vitre mobile est coulissante, de façon à pouvoir pénétrer partiellement à l'intérieur de la porte du véhicule, un joint lécheur est en général prévu au niveau de la fente par laquelle la glace pénètre à l'intérieur de la carrosserie, pour assurer l'étanchéité.

Dans le cas des « baies flush» développées par le déposant de la présente demande de brevet et rapidement décrit ci-dessus, ces techniques ne peuvent pas être appliquées. En effet, il n'existe pas de zones de contact entre la carrosserie et la partie mobile en position fermée. De plus, en position ouverte, l'ouverture ménagée dans la partie fixe est complètement dégagée.

Une technique particulière destinée aux « baies flush » est décrite dans la demande de brevet FR-2 782 298. Selon cette technique, on prévoit un joint d'étanchéité formant un cadre, correspondant aux bords de la partie fixe définissant l'ouverture, et présentant une première partie formant cavalier, destinée à chevaucher les bords de l'ensemble fixe et une seconde partie formant au moins une lèvre d'étanchéité s'étendant vers l'ouverture, de façon à venir en contact avec la partie mobile lorsque cette dernière est en position fermée.

Cette technique est bien adaptée aux « baies flush ». Cependant, elle introduit une étape supplémentaire dans le montage du dispositif d'obturation, puisqu'il faut mettre en place le joint, qui doit venir chevaucher l'intégralité du contour de l'ouverture. Ce joint doit de plus avoir été préalablement réalisé, et notamment assemblé, pour former un cadre. Dans le cadre d'une industrialisation optimisée, il est souhaitable que de telles opérations soient supprimées, ou à tout le moins simplifiées.

Par ailleurs, les « baies flush » permettent de réaliser des parois de véhicule à l'aspect lisse, présentant un aspect esthétique et aérodynamique souvent recherché actuellement dans le domaine de la construction automobile.

La présence d'un joint d'étanchéité tel que décrit ci-dessus forme un léger renflement, qui introduit une discontinuité d'apparence clairement non souhaitable. En effet, cette discontinuité « saute aux yeux » d'autant plus qu'il s'agit du seul élément proéminant.

Une autre technique particulière destinée aux « baies flush » est décrite dans le brevet FR-2 797 227 au nom du même titulaire que la présente demande de brevet. Elle repose sur la réalisation d'un joint d'étanchéité intérieur présentant une lèvre d'étanchéité venant en contact avec un ensemble fixe de la carrosserie en position fermée, et solidaire d'une base rigide montée sur la partie mobile (ou vitre) permettant de dégager une ouverture. Selon cette technique, la base est alors réalisée dans un matériau rigide tel qu'un plastique, un caoutchouc dur ou du polyuréthane. Elle est ensuite rapportée sur la vitre par collage.

Les joints d'étanchéité présentant une telle base sont cependant d'une robustesse aux chocs et aux éventuelles tentatives d'intrusion dans le véhicule limitée.

L'invention a notamment pour objectif de pallier ces inconvénients de l'art antérieur.

Plus précisément, un objectif de l'invention est de fournir un dispositif d'obturation affleurant, encore appellé « baies flush », qui présente de bonnes qualités d'étanchéité, sans perturber l'aspect affleurant extérieur du dispositif.

Un autre objectif de l'invention est de fournir un tel dispositif d'obturation, qui soit aisé et peu coûteux à réaliser, au moins en ce qui concerne l'étanchéité de l'ouverture.

Notamment, un objectif de l'invention est d'éviter la réalisation indépendante et le montage d'un joint venant chevaucher le pourtour de l'ouverture ménagée dans la partie fixe.

L'invention a également pour objectif de fournir un tel dispositif d'obturation, qui présente une très bonne efficacité d'étanchéité, au moins égale, et si possible supérieure, aux techniques d'étanchéité de type connu.

L'invention a encore pour objectif de proposer une technique permettant de conférer une robustesse satisfaisante à un tel dispositif.

Un autre objectif de l'invention est de ne pas limiter le clair de baie.

Encore un autre objectif de l'invention est de proposer un dispositif d'obturation dont l'aspect esthétique soit satisfaisant, et en particulier, qui assure un aspect extérieur affleurant.

Ces objectifs, ainsi que d'autres qui apparaîtront par la suite, sont atteints à l'aide d'un dispositif d'obturation d'une baie ménagée dans la carrosserie d'un véhicule, du type comprenant un ensemble fixe, destiné à être rapporté sur ladite carrosserie, et au moins un panneau mobile par rapport audit ensemble fixe, venant fermer ou libérer une ouverture ménagée dans ledit ensemble fixe, ledit ensemble fixe et ledit panneau mobile se trouvant dans un même plan, en position fermée, le panneau mobile portant un joint d'étanchéité venant en appui contre la face dudit ensemble fixe tournée vers l'intérieur du véhicule, dans ladite position fermée, et monté sur un support de joint solidarisé à la face dudit panneau mobile tournée vers l'intérieur du véhicule.

Selon l'invention, ledit panneau mobile présente un élément de renfort dudit support de joint, monté et/ou formé dans un logement défini par ledit support de joint, ce dernier présentant une section transversale de forme générale en « U » ou en « V » et ledit logement correspondant au moins à la portion inférieure de l'intérieur dudit « U » ou « V ».

Ainsi, l'invention repose sur une approche nouvelle et inventive consistant à réaliser un dispositif d'obturation pour "baie flush", comprenant un joint d'étanchéité porté par un support de joint solidaire du panneau mobile, sur la face intérieure de celui-ci, un élément de renfort étant situé dans un logement du support de joint, de façon que celui-ci soit situé entre le support de joint et le panneau mobile.

La présence de cet élément de renfort permet d'améliorer la robustesse du dispositif d'obturation, contre les tentatives de vol et d'intrusions par exemple.

Un tel dispositif d'obturation est ainsi plus robuste que lorsque seul un support de joint est présent, comme c'est le cas selon les techniques connues de l'art antérieur.

De façon avantageuse, l'élément de renfort assure au moins en partie la solidarisation du support de joint au panneau mobile.

L'élément de renfort (également appelé « liant ») situé entre le support de joint et le panneau mobile permet ainsi d'améliorer la robustesse du dispositif d'obturation, et également de solidariser le support de joint au panneau mobile.

De façon avantageuse, l'élément de renfort présente une surface extérieure affleurante avec le panneau mobile, de façon à être coplanaire avec l'ensemble fixe dans la position fermée.

Ainsi, le liant, outre les fonctions de liaison et de robustesse, a également une fonction d'aspect, celui-ci présentant une partie affleurante s'étendant entre l'ensemble fixe et le panneau mobile.

De façon préférée, l'élément de renfort est réalisé dans un matériau thermodurcissable.

Préférentiellement, le matériau thermodurcissable est du polychlorure de vinyle (PVC) ou du polyuréthane. Le polyuréthane pourra en particulier être utilisé de façon avantageuse, celui-ci se dégradant faiblement dans le temps et sous l'effet des rayons UV.

Avantageusement, le support de joint est réalisé en plastique ou en polyamide. D'une façon générale, il sera préférable que le support de joint soit rigide, de façon à résister aux déformations.

De façon préférée, le joint d'étanchéité forme un cadre coïncidant sensiblement avec les bords de l'ouverture.

De façon avantageuse, le joint d'étanchéité porté par le support de joint est clippé sur celui-ci.

Préférentiellement, le joint d'étanchéité présente une lèvre d'étanchéité, dont l'extrémité vient en contact avec la face de l'ensemble fixe tournée vers l'intérieur du véhicule et se replie vers le support de joint, de façon que tout fluide pénétrant entre le panneau mobile et l'ensemble fixe agisse sur l'extrémité libre du joint, de façon à plaquer cette dernière contre l'élément sur lequel elle assure l'étanchéité, de façon à renforcer celle-ci.

L'invention concerne également les véhicules équipés d'un tel dispositif d'obturation, et le procédé de fabrication d'un dispositif tel que décrit ci-dessus. Selon ce procédé, on place le panneau mobile et le support de joint dans un moule et l'élément de renfort est introduit entre ces deux élément pour être moulé directement.

Ainsi, à l'issue du procédé de fabrication, le support technique sera directement solidarisé au panneau mobile par l'élément de renfort.

Le procédé de fabrication comprend ainsi les étapes de :
- réalisation du panneau mobile et du support de joint;
- mise en place du panneau mobile et du support de joint dans un moule ;
- introduction d'un élément de renfort à l'intérieur du moule, entre le panneau mobile et le support de joint.

Il sera possible de prévoir la présence de centreurs, c'est-à-dire de petits pions pour centrer et ajuster la position du panneau mobile et du support de joint préalablement à l'introduction de l'élément de renfort. Une fois l'ajustement des positions réalisé, les pions pourront avantageusement être rétractés avant l'introduction de l'élément de renfort.

De façon avantageuse, le procédé de fabrication comprend une étape de chauffage consécutive à l'étape d'introduction de l'élément de renfort, celui-ci étant réalisé dans un matériau thermodurcissant.

D'autres caractéristiques et avantages de l'invention apparaîtront plus clairement à la lecture de la description à l'aide d'un mode de réalisation préférentiel de l'invention donnée à titre de simples exemples illustratifs et non limitatifs, et des dessins annexés parmi lesquels :
- la figure 1 illustre un exemple de dispositif d'obturation de type «baie flush », auquel l'invention peut avantageusement s'appliquer ;
- la figure 2 présente, en coupe transversale, un mode de réalisation du joint d'étanchéité de l'invention ;
- la figure 3 illustre le procédé de fabrication d'un dispositif d'obturation selon l'invention.

Le dispositif d'obturation d'une baie selon l'invention est prévu pour équiper un véhicule. Il est destiné à être rapporté sur une ouverture ménagée dans la carrosserie du véhicule. Une telle ouverture peut être réalisée sur une paroi latérale du véhicule, le pavillon... Elle peut être plane, ou incurvée de façon à suivre la carrosserie.

Ce dispositif d'obturation est par exemple du type décrit dans les documents de brevet EP-0 778 168 et EP-0 857 844 déjà mentionnés. Bien que, par la suite, on décrive un dispositif d'obturation dont le panneau mobile se déplace par coulissement, il est clair que l'invention s'applique plus généralement à tous les types de « baies flush », et notamment aux « baies flush » dont le panneau mobile est montée basculant.

Comme indiqué précédemment, le principe de l'invention repose sur la réalisation d'un dispositif d'obturation comprenant un élément de renfort du support de joint, monté dans un logement du support de joint, l'élément de renfort (également appelé « liant ») pouvant également assurer au moins en partie la solidarisation du support de joint au panneau mobile permettant de libérer ou d'obturer une ouverture.

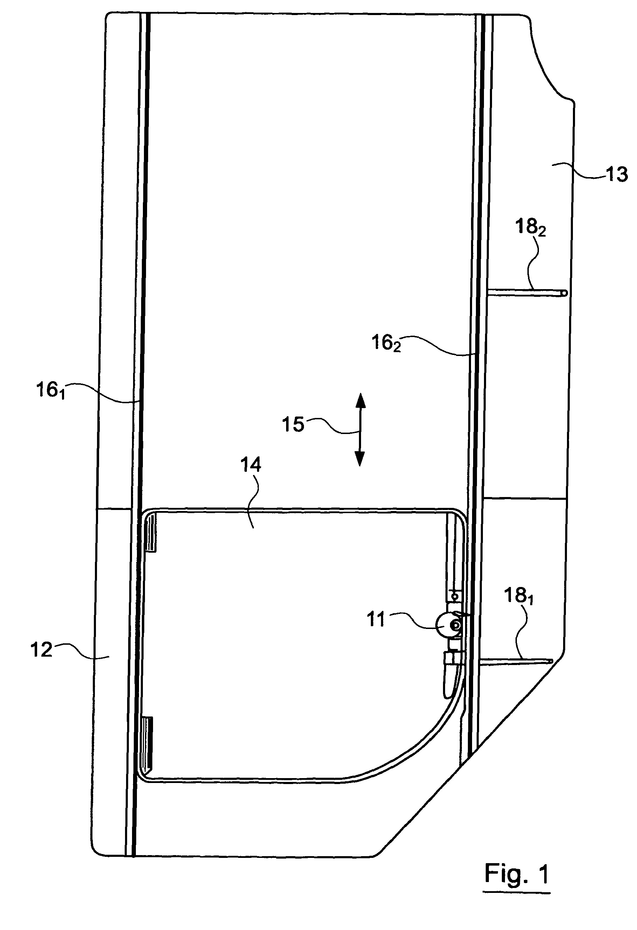

Dans l'exemple illustré en figure 1, le dispositif d'obturation comprend un ensemble fixe constitué d'un premier élément 12 en forme générale de C (dont l'intérieur définit au moins partiellement l'ouverture ménagée dans la baie). Cet élément 12 porte des rails de coulissement 16₁ et 16₂ recevant la partie mobile 14 (également appelée « panneau mobile »), qui s'étendent parallèlement, dans le prolongement des deux extrémités du C. L'ensemble fixe comprend encore un second élément 13, venant prendre place sur ces rails 16₁ et 16₂, et définissant le quatrième côté de l'ouverture.

L'élément 12 en forme de C peut être indifféremment être réalisé en une ou plusieurs parties. Par ailleurs, la forme générale du panneau mobile est ici considérée, par simplification, comme étant essentiellement rectangulaires. Il est clair cependant qu'il peut être de forme quelconque, en fonction notamment de contraintes techniques et/ou esthétiques.

Lorsque le panneau mobile 14 (tel qu'une vitre par exemple) est en position d'obturation, l'ensemble du dispositif se trouve dans un plan unique. La poignée 11 assure le verrouillage du panneau mobile dans cette position.

Avantageusement, le mouvement du panneau mobile 14 par rapport à l'ensemble fixe 12, 13 est décomposé en deux déplacements indépendants :
- un déplacement perpendiculaire par rapport au plan formé par l'ensemble fixe, permettant le passage d'une position fermée, et verrouillée, dans laquelle le panneau mobile se trouve dans le même plan que l'ensemble fixe, et obture l'ouverture, à une position de libération, dans laquelle le panneau mobile est décalé dans un plan de coulissement, par rapport à l'ensemble fixe, de façon à permettre le coulissement.
   Lors du passage de la position d'obturation à la position de libération, on notera que, dans le mode de réalisation particulier décrit par la suite, le panneau mobile est légèrement décalé vers le bas, par rapport à l'ouverture ;
- un déplacement 15 parallèle au plan formé par l'ensemble fixe, dans le plan de coulissement.

Bien sûr, d'autres mouvements sont possibles. Par exemple, le panneau mobile peut suivre une courbe selon laquelle les deux mouvements (verrouillage/déverrouillage et coulissement) sont liés.

La poignée 11 (qui peut avoir un mouvement de rotation ou un mouvement de translation) permet d'assurer d'une part le changement de plan, par exemple à l'aide d'un plan incliné, et d'autre part le coulissement.

Bien que dans l'exemple illustré en figure 1, la baie soit plane et rectangulaire, il est clair que l'invention s'applique également à tout autre type d'ouverture. Notamment, la vitre 14 peut être bombée, incurvée et/ou d'une forme quelconque.

Par ailleurs, le dispositif de l'invention s'applique notamment aux parois latérales d'un véhicule. Cependant, il peut également être mis en oeuvre sur le pavillon d'un véhicule, et plus généralement en tout emplacement où cela serait souhaitable.

La vitre 14 peut être en verre ou en un matériau transparent ou translucide adapté. Elle peut également être réalisée dans le même matériau que la carrosserie. On notera également qu'il est possible d'utiliser plusieurs vitres indépendantes pour obturer une baie (par exemple une vitre se déplaçant vers la gauche et l'autre vers la droite). Le cas échéant, l'une des vitres peut être fixe.

Comme indiqué précédemment, l'invention propose une technique nouvelle pour assurer l'étanchéité entre le panneau mobile et l'ensemble fixe d'une « baie flush », selon laquelle un support de joint est réalisé sur la face tournée vers l'intérieur du véhicule du panneau mobile, le support de joint portant un joint d'étanchéité venant en appui contre l'ensemble fixe.

Selon l'invention, un élément de renfort est monté ou formé dans un logement du support de joint. Celui-ci permet ainsi d'augmenter la robustesse du support de joint et peut assurer au moins en partie la solidarisation du support de joint au panneau mobile.

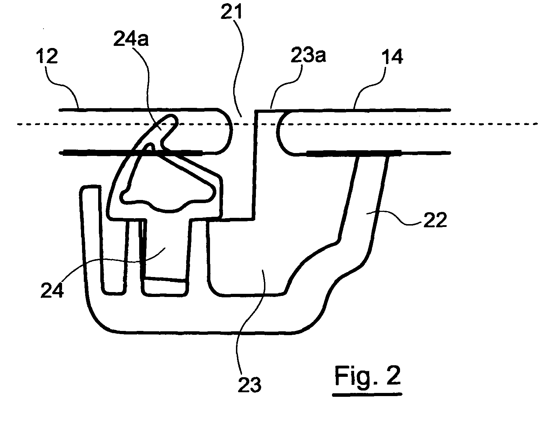

La figure 2 présente, en coupe transversale, un mode de réalisation d'un tel dispositif On distingue le support de joint 22, solidaire de la face du panneau mobile 14 tournée vers l'intérieur du véhicule, et s'étendant au-delà de l'interstice 21 entre le panneau mobile 14 et l'ensemble fixe 12 ou 13.

Un élément de renfort 23 (également appelé « liant ») est situé entre le support de joint 22 et le panneau mobile 14, à l'intérieur d'un logement du support de joint 22, celui-ci présentant une forme générale en U. L'élément de renfort 23 pourra par exemple être réalisé par moulage, à l'intérieur d'un moule dans lequel sont placés le panneau mobile et le support de joint pour être injecté et moulé directement entre ces deux éléments, comme cela sera décrit par la suite.

L'élément de renfort 23 présente une partie 23a affleurante avec le panneau mobile 14, située au niveau de l'interstice 21 entre le panneau mobile 14 et l'ensemble fixe 12 ou 13.

Le support de joint 22 est réalisé dans un matériau rigide tel que du plastique ou du polyamide, de façon à ne pas se déformer sous les efforts de fermeture.

Un joint d'étanchéité 24 présentant une lèvre 24a souple, revenant vers l'interstice 21 entre l'ensemble fixe 12 ou 13 et le panneau mobile 14, est monté sur le support de joint 22. Le joint d'étanchéité 24 peut par exemple être clippé dans le support 22 et peut être réalisé en plastique élastomère ou en caoutchouc souple.

La lèvre d'étanchéité 24a doit en effet être souple pour se conformer à l'ensemble fixe 12 ou 13, et avoir une bonne rémanence dans le temps (c'est-à-dire qu'il ne doit pas perdre sa souplesse ni son ressort après exposition à la lumière, à la température,...).

Le liant 23, outre le fait qu'il permet de solidariser aisément le support technique 22 sur la partie mobile 14, permet également de renforcer la robustesse de l'interstice 21, et par conséquent du dispositif d'obturation.

L'invention permet ainsi la réalisation d'un dispositif d'obturation plus robuste que ceux de l'art antérieur prévoyant uniquement l'utilisation d'un support de joint.

Le liant (ou élément de renfort) 23 pourra par exemple être réalisé dans un matériau thermodurcissant, tel que le polychlorure de vinyle (PVC) ou le polyuréthane. Dans le cas où celui-ci est introduit et moulé directement entre le panneau mobile 14 et le support 22, comme indiqué précédemment, une étape supplémentaire de chauffage sera réalisée consécutivement à l'introduction du liant.

La réalisation de l'élément de renfort 23 en polyuréthane est particulièrement avantageuse, dans la mesure où ce matériau permet une meilleure solidarisation et du fait qu'il présente une bonne rémanence dans le temps, en termes de vieillissement et d'exposition aux UV.

Le support de joint 22 est réalisé, par exemple en un plastique rigide ou du caoutchouc dur. Celui-ci doit en effet être rigide, de façon à ne pas se déformer sous les efforts de fermeture.

Selon le mode de réalisation envisagé, le support de joint est solidaire du panneau mobile 14 du dispositif d'obturation, et la lèvre 24a du joint d'étanchéité 24 vient en contact avec l'ensemble fixe 12, lorsqu'il est en position d'obturation de l'ouverture.

Il est cependant également possible de réaliser l'invention en prévoyant que le support de joint 22 soit monté sur l'ensemble fixe 12, 13 et que le joint d'étanchéité 24 soit en contact avec le panneau mobile lorsque celui-ci est dans la position de fermeture.

Lorsque le panneau mobile se décale vers l'intérieur, ainsi que cela est illustré en figure 1, le support de joint 22 est donc monté sur le panneau mobile 14, et la lèvre d'étanchéité 24a vient en contact avec l'ensemble fixe 12.

Bien sûr, dans le cas où le panneau mobile se décale vers l'extérieur, les rôles sont inversés : le support de joint est monté sur l'ensemble fixe, et la lèvre d'étanchéité vient en contact avec le panneau mobile, lorsque celui-ci se trouve en position fermée.

Selon le mode de réalisation illustré par la figure 2, lorsque le liquide pénètre par l'interstice 21, il ne peut pas pénétrer à l'intérieur du véhicule. Il se peut en revanche qu'il en subsiste à l'intérieur du logement défini par le support de joint 22, l'élément de renfort 23 et le joint d'étanchéité 24. Dans ce cas, le liquide est naturellement guidé vers le bas, et des moyens sont prévus pour le diriger vers le rail inférieur 16₂, qui possède des canules 18₁, 18₂, qui permettent l'évacuation des liquides le long de la carrosserie. Ces canules sont conçues de façon à s'étendre au-delà du cordon de colle permettant la solidarisation du dispositif d'obturation sur la carrosserie.

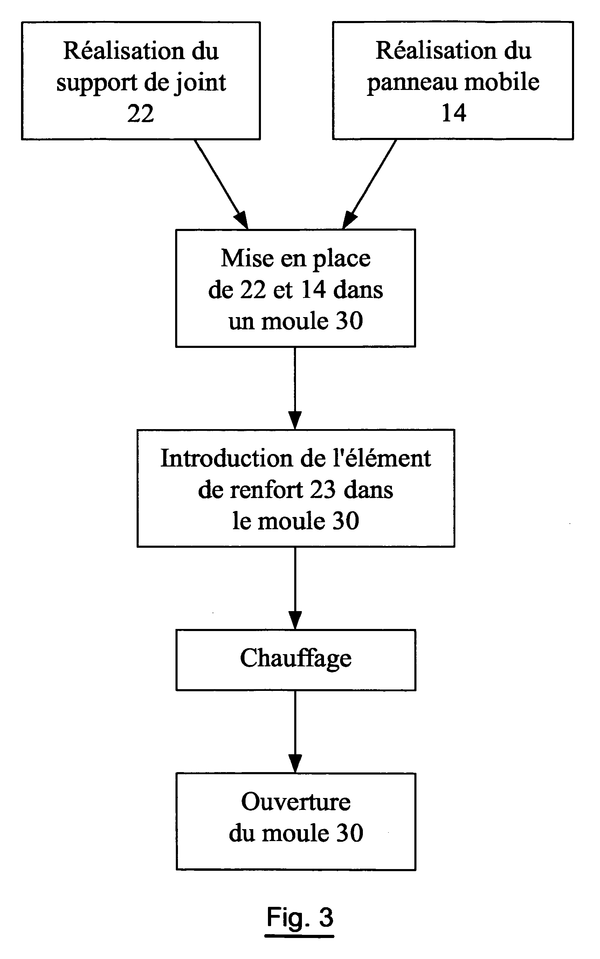

Un dispositif d'obturation, tel que décrit précédemment, peut être fabriqué de façon simple. Un procédé de fabrication du dispositif est illustré par la figure 3 et prévoit la réalisation du panneau mobile 14 et du support de joint 22, par exemple par moulage, et la mise en place de ceux-ci dans un moule 30. Le moule est ensuite refermé et le panneau mobile 14 est bridé. Des centreurs peuvent être utilisé pour ajuster la position du support de joint 22 et du panneau mobile 14, ceux-ci pouvant ensuite être rétractés.

L'élément de renfort 23 (ou liant) est ensuite introduit, par exemple par injection, à l'intérieur du moule 30, entre le panneau mobile 14 et le support de joint 22 pour être formé directement dans le logement du support de joint 22.

Dans le cas où l'élément de renfort est réalisé dans un matériau thermodurcissant, une étape de chauffage consécutive à son introduction dans le moule est mise en oeuvre.

Un tel procédé permet ainsi de réaliser le dispositif d'obturation de manière simple, la solidarisation entre le support de joint 22 et le panneau mobile 14 pouvant alors être directement réalisée par le moulage de l'élément de renfort 23.

## Revendications

1. Dispositif d'obturation d'une baie ménagée dans la carrosserie d'un véhicule, du type comprenant un ensemble fixe (12,13), destiné à être rapporté sur ladite carrosserie, et au moins un panneau mobile (14) par rapport audit ensemble fixe (12,13), venant fermer ou libérer une ouverture ménagée dans ledit ensemble fixe (12,13), ledit ensemble fixe (12,13) et ledit panneau mobile (14) se trouvant dans un même plan, en position fermée,
le panneau mobile (14) portant un joint d'étanchéité (24) venant en appui sur la face dudit ensemble fixe (12,13) tournée vers l'intérieur du véhicule, dans ladite position fermée, et monté sur un support de joint (22) solidarisé à la face dudit panneau mobile (14) tournée vers l'intérieur du véhicule,
**caractérisé en ce que** ledit panneau mobile (14) présente un élément de renfort (23) dudit support de joint (22), monté et/ou formé dans un logement défini par ledit support de joint (22),
ce dernier présentant une section transversale de forme générale en « U » ou en « V » et ledit logement correspondant au moins à la portion inférieure de l'intérieur dudit « U » ou « V ».

2. Dispositif d'obturation selon la revendication 1, **caractérisé en ce que** ledit élément de renfort (23) assure au moins en partie la solidarisation dudit support de joint (22) audit panneau mobile (14).

3. Dispositif d'obturation selon l'une quelconque des revendications 1 et 2, **caractérisé en ce que** ledit élément de renfort (23) présente une surface extérieure affleurante (23a) avec ledit panneau mobile (14), de façon à être coplanaire avec ledit ensemble fixe (12,13) dans ladite position fermée.

4. Dispositif d'obturation selon l'une quelconque des revendications 1 à 3, **caractérisé en ce que** ledit élément de renfort (23) est réalisé dans un matériau thermodurcissable.

5. Dispositif d'obturation selon la revendication 4, **caractérisé en ce que** ledit matériau thermodurcissable est du polychlorure de vinyle (PVC) ou du polyuréthane.

6. Dispositif d'obturation selon l'une quelconque des revendications 1 à 5, **caractérisé en ce que** ledit support de joint (22) est réalisé en plastique ou en polyamide.

7. Dispositif d'obturation selon l'une quelconque des revendications 1 à 6, **caractérisé en ce que** ledit joint d'étanchéité (24) forme un cadre coïncidant sensiblement avec les bords de ladite ouverture.

8. Véhicule automobile comprenant au moins un dispositif d'obturation d'une baie ménagée dans la carrosserie dudit véhicule, du type comprenant un ensemble fixe (12, 13), destiné à être rapporté sur ladite carrosserie, et au moins un panneau mobile (14) par rapport audit ensemble fixe (12, 13), venant fermer ou libérer une ouverture ménagée dans ledit ensemble fixe (12, 13), ledit ensemble fixe (12, 13) et ledit panneau mobile (14) se trouvant dans un même plan, en position fermée,
le panneau mobile (14) portant un joint d'étanchéité (24) venant en appui sur la face dudit ensemble fixe (12, 13) tournée vers l'intérieur du véhicule, dans ladite position fermée, et monté sur un support de joint (22) solidarisé à la face dudit panneau mobile (14) tournée vers l'intérieur du véhicule,
**caractérisé en ce que** ledit panneau mobile (14) présente un élément de renfort(23) dudit support de joint (22), monté et/ou formé dans un logement défini par ledit support de joint (22),
ce dernier présentant une section transversale de forme générale en « U » ou en « V » et ledit logement correspondant au moins à la portion inférieure de l'intérieur dudit « U » ou « V ».

9. Procédé de fabrication d'un dispositif d'obturation d'une baie ménagée dans la carrosserie d'un véhicule, du type comprenant un ensemble fixe (12,13) destiné à être rapporté sur ladite carrosserie et un panneau mobile (14) par rapport audit ensemble fixe (12, 13) pouvant venir obturer ou libérer une ouverture dans ledit ensemble fixe (12, 13),
ledit le panneau mobile (14) portant un joint d'étanchéité (24) venant en appui sur la face dudit ensemble fixe (12, 13) tournée vers l'intérieur du véhicule, dans ladite position fermée, et monté sur un support de joint (22) solidarisé à la face dudit panneau (14) tournée vers l'intérieur du véhicule **caractérisé en ce qu'**il comprend les étapes de :
- réalisation dudit panneau mobile (14) et dudit support de joint (22) ;
- mise en place dudit panneau mobile (14) et dudit support de joint (22) dans un moule (30) ;
- introduction d'un élément de renfort (23) à l'intérieur dudit moule (30), entre ledit panneau mobile (14) et ledit support de joint (22).

10. Procédé selon la revendication 9, **caractérisé en ce qu'**il comprend une étape de chauffage consécutive à ladite étape d'introduction dudit élément de renfort (23), celui-ci étant réalisé dans un matériau thermodurcissant.

## Claims

1. Device for closing an opening arranged in the body of a vehicle, said device being of the type comprising a fixed assembly (12, 13), which is intended to be added onto the said body, and at least one panel (14) which is movable in relation to the said fixed assembly (12, 13) and closes or unblocks an aperture arranged in the said fixed assembly (12, 13), the said fixed assembly (12, 13) and the said movable panel (14) being located in the same plane in the closed position;
the movable panel (14) carrying a seal (24) which rests on that face of the said fixed assembly (12, 13) which faces towards the interior of the vehicle in the closed position, and which seal is mounted on a seal support (22) which is fastened to that face of the said movable panel (14) which faces towards the interior of the vehicle;
**characterised in that** the said movable panel (14) has an element (23) for reinforcing the said seal support (22), which element is mounted and/or formed in a housing defined by the said seal support (22),
the latter having a generally "U"-shaped or "V"-shaped cross-section and the said housing corresponding at least to the lower portion of the interior of the said "U" or "V".

2. Closing device according to claim 1, **characterised in that** the said reinforcing element (23) at least partly brings about the attachment of the said seal support (22) to the said movable panel (14).

3. Closing device according to either of claims 1 or 2, **characterised in that** the said reinforcing element (23) has an outer surface (23a) which is flush with the said movable panel (14), so as to be coplanar with the said fixed assembly (12, 13) in the said closed position.

4. Closing device according to any of claims 1 to 3, **characterised in that** the said reinforcing element (23) is made of a thermosetting material.

5. Closing device according to claim 4, **characterised in that** the said thermosetting material is polyvinyl chloride (PVC) or polyurethane.

6. Closing device according to any of claims 1 to 5, **characterised in that** the said seal support (22) is made of plastic or polyamide.

7. Closing device according to any of claims 1 to 6, **characterised in that** the said seal (24) forms a frame which substantially coincides with the edges of the said aperture.

8. Motor vehicle comprising at least one device for closing an opening arranged in the body of a vehicle, said device being of the type comprising a fixed assembly (12, 13), which is intended to be added onto the said body, and at least one panel (14) which is movable in relation to the said fixed assembly (12, 13) and closes or unblocks an aperture arranged in the said fixed assembly (12, 13), the said fixed assembly (12, 13) and the said movable panel (14) being located in the same plane in the closed position;
the movable panel (14) carrying a seal (24) which rests on that face of the said fixed assembly (12, 13) which faces towards the interior of the vehicle in the closed position, and which seal is mounted on a seal support (22) which is fastened to that face of the said movable panel (14) which faces towards the interior of the vehicle;
**characterised in that** the said movable panel (14) has an element (23) for reinforcing the said seal support (22), which element is mounted and/or formed in a housing defined by the said seal support (22), the latter having a generally "U"-shaped or "V"-shaped cross-section and the said housing corresponding at least to the lower portion of the interior of the said "U" or "V".

9. Method of manufacturing a device for closing an opening arranged in the body of a vehicle, said device being of the type comprising a fixed assembly (12, 13), which is intended to be added onto the said body, and a panel (14) which is movable in relation to the said fixed assembly (12, 13) and is capable of closing or unblocking an aperture in the said fixed assembly (12, 13);
the said movable panel (14) carrying a seal (24) which rests on that face of the said fixed assembly (12, 13) which faces towards the interior of the vehicle in the closed position, and which seal is mounted on a seal support (22) which is fastened to that face of the said panel (14) which faces towards the interior of the vehicle;
**characterised in that** it comprises the following stages:
- the production of the said movable panel (14) and of the said seal support (22);
- the positioning of the said movable panel (14) and of the said seal support (22) in a mould (30);
- the introduction of a reinforcing element (23) inside the said mould (30), between the said movable panel (14) and the said seal support (22).

10. Method according to claim 9, **characterised in that** it comprises a heating stage following the said stage for the introduction of the said reinforcing element (23), the latter being made of a thermosetting material.

## Patentansprüche

1. Vorrichtung zum Verschließen einer Öffnung, die in der Karosserie eines Fahrzeugs eingerichtet ist, des Typs, der eine stationäre Baugruppe (12, 13), die dazu bestimmt ist, auf die Karosserie angebaut zu werden, und mindestens eine Platte (14) aufweist, die in Bezug zu der stationären Baugruppe (12, 13) beweglich ist, die eine Öffnung schließt oder freigibt, die in der stationären Baugruppe (12, 13) eingerichtet ist, wobei sich die stationäre Baugruppe (12, 13) und die bewegliche Platte (14) in geschlossener Stellung in einer gleichen Ebene befinden,
wobei die bewegliche Platte (14) eine Dichtung (24) trägt, die auf der Seite der stationären Baugruppe (12, 13), die zum Inneren des Fahrzeugs gekehrt ist, in der geschlossenen Position zum Aufliegen kommt, und die auf einen Dichtungsträger (22) montiert ist, der fest mit der Seite der beweglichen Platte (14), die zum Inneren des Fahrzeugs gekehrt ist, verbunden ist,
**dadurch gekennzeichnet, dass** die bewegliche Platte (14) ein Verstärkungselement (23) des Dichtungsträgers (22) aufweist, das in einer Aufnahme, die von dem Dichtungsträger (22) definiert wird, montiert und/oder ausgebildet ist,
wobei dieser Letztere einen Querschnitt mit allgemeiner U-Form oder V-Form aufweist und wobei die Aufnahme mindestens dem unteren Abschnitt des Inneren des "U" oder "V" entspricht.

2. Verschlussvorrichtung nach Anspruch 1, **dadurch gekennzeichnet, dass** das Verstärkungselement (23) mindestens zum Teil das feste Verbinden des Dichtungsträgers (22) mit der beweglichen Platte (14) sicherstellt.

3. Verschlussvorrichtung nach einem der Ansprüche 1 und 2, **dadurch gekennzeichnet, dass** das Verstärkungselement (23) eine Außenfläche (23a) aufweist, die mit der beweglichen Platte (14) bündig ist, so dass sie in der geschlossenen Position in der gleichen Ebene mit der stationären Baugruppe (12, 13) liegt.

4. Verschlussvorrichtung nach einem der Ansprüche 1 bis 3, **dadurch gekennzeichnet, dass** das Verstärkungselement (23) aus einem wärmehärtbaren Werkstoff hergestellt ist.

5. Verschlussvorrichtung nach Anspruch 4, **dadurch gekennzeichnet, dass** der wärmehärtbare Werkstoff Vinylpolychlorid (PVC) oder Polyurethan ist.

6. Verschlussvorrichtung nach einem der Ansprüche 1 bis 5, **dadurch gekennzeichnet, dass** der Dichtungsträger (22) aus Plastik oder aus Polyamid hergestellt ist.

7. Verschlussvorrichtung nach einem der Ansprüche 1 bis 6, **dadurch gekennzeichnet, dass** die Dichtung (24) einen Rahmen bildet, der im Wesentlichen mit den Rändern der Öffnung zusammenfällt.

8. Kraftfahrzeug, das mindestens eine Verschlussvorrichtung einer Öffnung, die in der Karosserie des Fahrzeugs eingerichtet ist, aufweist, des Typs, der eine stationäre Baugruppe (12, 13) aufweist, die dazu bestimmt ist, auf die Karosserie angebaut zu werden, und mindestens eine in Bezug zu der stationären Baugruppe (12, 13) bewegliche Platte (14) aufweist, die eine Öffnung, die in der stationären Baugruppe (12, 13) eingerichtet ist, schließt oder freigibt, wobei sich die stationäre Baugruppe (12, 13) und die bewegliche Platte (14) in der geschlossenen Position in einer gleichen Ebene befinden,
wobei die bewegliche Platte (14) eine Dichtung (24) trägt, die auf der Seite der stationären Baugruppe (12, 13), die zum Inneren des Fahrzeugs gekehrt ist, in der geschlossenen Position zum Aufliegen kommt und die auf einen Dichtungsträger (22) montiert ist, der an der Seite der beweglichen Platte (14), die zum Inneren des Fahrzeugs gekehrt ist, fest verbunden ist,
**dadurch gekennzeichnet, dass** die bewegliche Platte (14) ein Verstärkungselement (23) des Dichtungsträgers (22) aufweist, das in einer Aufnahme, die von dem Dichtungsträger (22) definiert ist, montiert und/oder ausgebildet ist,
wobei dieser Letztere einen Querschnitt in allgemeiner U-Form oder in V-Form aufweist und die Aufnahme mindestens dem unteren Abschnitt des Inneren des "U" oder "V" entspricht.

9. Verfahren zum Herstellen einer Verschlussvorrichtung einer Öffnung, die in der Karosserie eines Fahrzeugs eingerichtet ist, des Typs, der eine stationäre Baugruppe (12, 13) aufweist, die dazu bestimmt ist, auf die Karosserie angebaut zu werden, und eine in Bezug auf die stationäre Baugruppe (12, 13) bewegliche Platte (14) aufweist, die eine Öffnung in der stationären Baugruppe (12, 13) verschließen oder freigeben kann,
wobei die bewegliche Platte (14) eine Dichtung (24) trägt, die in der geschlossenen Position auf der Seite der stationären Baugruppe (12, 13), die zum Inneren des Fahrzeugs gekehrt ist, zum Aufliegen kommt, und die auf einen Dichtungsträger (22) montiert ist, der mit der Seite der Platte (14), die zum Inneren des Fahrzeugs gekehrt ist, fest verbunden ist,
**dadurch gekennzeichnet, dass** es die folgenden Schritte aufweist:
- Ausführen der beweglichen Platte (14) und des Dichtungsträgers (22);
- Anbringen der beweglichen Platte (14) und des Dichtungsträgers (22) in einer Form (30);
- Einführen eines Verstärkungselements (23) in das Innere der Form (30) zwischen die bewegliche Platte (14) und den Dichtungsträger (22).

10. Verfahren nach Anspruch 9, **dadurch gekennzeichnet, dass** es einen Schritt des Heizens im Anschluss an den Schritt des Einführens des Verstärkungselements (23) aufweist, wobei dieser in einem wärmehärtbaren Werkstoff ausgeführt wird.
